(19) **Europäisches Patentamt / European Patent Office / Office européen des brevets**

(11) **EP 4 692 454 A1**

(12) # EUROPEAN PATENT APPLICATION

(43) Date of publication:
**11.02.2026 Bulletin 2026/07**

(21) Application number: **24382882.9**

(22) Date of filing: **06.08.2024**

(51) International Patent Classification (IPC):
*D06P 1/00* (2006.01)    *B23K 26/06* (2014.01)
*B23K 26/36* (2014.01)    *B23K 26/082* (2014.01)
*D06B 11/00* (2006.01)    *D06P 1/44* (2006.01)
*D06P 1/62* (2006.01)    *D06P 1/651* (2006.01)
*D06P 5/13* (2006.01)    *D06P 5/15* (2006.01)
*D06P 5/20* (2006.01)

(52) Cooperative Patent Classification (CPC):
D06P 1/44; B23K 26/0622; B23K 26/0626;
B23K 26/082; B23K 26/0821; B23K 26/36;
D06P 1/0016; D06P 1/445; D06P 1/627;
D06P 1/65118; D06P 5/13; D06P 5/15;
D06P 5/2005; B23K 2103/38

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.08.2024 EP 24382878**

(71) Applicant: **On-Laser Systems & Applications, S. L.**
**08243 Manresa (ES)**

(72) Inventors:
• **VILA CLOSAS, Óscar**
**08272 Barcelona (ES)**
• **DOMINGUEZ MARTINEZ, Sergio**
**08270 Barcelona (ES)**

(74) Representative: **Elzaburu S.L.P.**
**Edificio Torre de Cristal**
**Paseo de la Castellana 259 C, planta 28**
**28046 Madrid (ES)**

(54) **OVER-PIGMENTATION COMPOSITION, METHOD OF OBTAINING SAID COMPOSITION, METHOD OF OVER-PIGMENTING A TEXTILE AND TEXTILE PRODUCT COMPRISING AN OVER-PIGMENTED TEXTILE**

(57) The invention relates to a composition of over-pigmentation of a textile material, method of obtaining said composition, method of over-pigmentation of a textile material and textile product comprising an over-pigmented textile material, wherein the composition comprises: 300 - 550 grams of water, 100 - 200 grams of over-pigment, 250 - 350 grams of dispersing agent, 50 - 150 grams of glycol, and 5 - 15 grams of wetting agent, wherein the over-pigment is a pigment configured to absorb laser radiation in the range of 400 to 1,800 nm and has a particle size of less than 10 micrometres.

Fig. 1

EP 4 692 454 A1

**Description**

**Field of the Invention**

The invention has application in the textile sector. Specifically, the solution relates to an over-pigmentation composition for laser marking of a textile material.

**State of the art**

Currently, developments in the textile industry cover countless fields, from the inclusion of synthetic fibres, smart fabrics, to shortening and making manufacturing processes efficient using increasingly automated machinery, in addition to reducing the environmental impact that it generates today. In addition to these developments, the resulting products must satisfy increasingly diverse consumption trends in terms of shapes, colours, designs, etc.

Thus, any material made of interlaced fibres can be understood as a textile material. Fibres can come from a variety of sources, including plants (such as cotton or linen), animals (such as wool or silk), minerals (such as glass), and synthetic materials (such as nylon or polyester). In particular, a thread is a long, continuous strand of textile fibres, which can be composed of a single continuous fibre (mono-filament) or of several shorter fibres spun together (multifilament). A fabric is a flexible material or product composed of a network of natural or synthetic fibres (threads or filaments). These fibres may be spun, woven, braided, or otherwise interwoven to form cloth or fabric.

When it comes to obtaining the different colours in textiles, a dyeing or pigmentation process is required. Thus, the dyeing or tinting of a textile is the process of applying colour to textile materials, such as fibres, threads, fabrics or garments, to change their original colour or give it a new colour. This process is fundamental in the manufacture of textiles, as it allows the creation of products with a wide variety of colours and patterns. On the other hand, over-dyeing or over-pigmentation is an additional dyeing process that is applied to textile materials, such as fibres, threads, fabrics or garments, after they have already been previously dyed with a base pigment. This process can have several objectives, including modifying the original colour, creating special effects or correcting unwanted colours.

In addition to traditional tinting, laser marking is currently compatible with the vast majority of textile materials, and its working speed and precision make laser machines ideal equipment for the development of new proposals in the textile sector. Finishing with a laser marker reduces environmental impact, processing time and overall processing costs, while maintaining the look and feel of traditional finishing techniques.

An example of use of this type of laser marker is the use of gaseous state lasers, specifically a $CO_2$ laser. This type of laser provides a predetermined finish to denim garments, obtaining a discoloured, worn appearance, washed in a textile type textile dyed in pure indigo, sulphurous indigo or a combination of both pigments. Individually or mixed, they are colouring pigments that resemble each other and can be used in textile laser marking processes at a high wavelength such as that used by a gaseous state laser, around 10,200 and 10,600 nm, which generates an ablation on the irradiated surface of the textile.

In this case, the use of a $CO_2$ gaseous state laser marker for marking implies more expensive acquisition costs, less energy-efficient processes, bulkier, and limited in its maximum permissible power for this textile application, which generates an increase in the cost of production and the space occupied in the plant.

Employing a low wavelength, for example, visible or near infrared length, allows reducing the cost of the textile marking operation, significantly increasing the quality (definition and repeatability) of the final finish on the textile, significantly increasing the durability of the textiles processed using this method, and therefore releasing a smaller amount of fibres in each wash of the garment during the garment finishing process, as well as throughout its useful life.

However, one of the main problems in the sector is the existence of textile materials that are non-reactive at a low wavelength, according to the incidence of a current laser marker.

An example of such textiles is a denim dyed in pure indigo. This type of base pigment does not react, for example, with laser radiation using a solid fiber laser having a NIR wavelength, usually between 1,060 and 1,090 nm, or more specifically 1,070 nm. The non-reactivity of a fabric dyed with pure indigo contrasts with that of a fabric dyed with a sulphurous indigo pigment which does react to the application of a laser with a wavelength of 1,070 nm.

It is, therefore, necessary to develop solutions that allow an improvement in the processes of treatment of a textile material by laser marking, allowing, among other improvements, the use of a greater number of textiles.

**Summary**

The present solution discloses an over-pigmentation composition wherein the composition is a solution comprising, per kilo of composition:

- 300 - 550 grams of water,

- 100 - 200 grams of over-pigment,
- 250 - 350 grams of dispersing agent,
- 50 - 150 grams of glycol, and
- 5-15 grams of wetting agent.

Over-pigment is a pigment capable of absorbing radiation from a laser in the range of 400 and 1,800 nm. In addition, for a correct arrangement on the surface of the textile material, the over-pigment must have a particle size of less than 10 micrometres.

The use of a solution from this over-pigmentation composition on a textile material generates a stained zone in the material, wherein said zone is reactive, including the base pigment of a dyed textile, to radiation from a laser marker in the wavelength range between 400 and 1,800 nm.

In a further embodiment of the solution, the invention relates to a method of obtaining the previously disclosed over-pigmentation composition. The method of obtaining the over-pigmentation composition comprises a step of mixing the elements and a subsequent grinding.

Specifically, mixing is done by introducing into a mixer, per kilogram of composition: 100 - 200 grams of over-pigment, 250 - 350 grams of dispersing agent, 50 - 150 grams of glycol, and 5 - 15 grams of a wetting agent in 400 - 550 grams of water. The result of mixing the elements is a uniform viscous mixture of all the elements of the composition. For its part, the milling of the uniform viscous mixture resulting from the above mixture gives rise to a composition comprising a particle size of less than 10 micrometres. This particle size allows a suitable arrangement in the subsequent over-pigmentation, or dyeing, of the textile material. Thus, the product resulting from this method is a concentrated viscous composition that can be operated by a user for marketing.

In yet another embodiment, an over-pigmentation method is disclosed. The over-pigmentation method comprises: applying a dilution of the over-pigmentation composition on a region, defining a stained area, of a textile material and applying laser radiation on at least one marking point of the stained area where the dilution has been applied, partially or totally removing both the over-pigmentation component and the base pigment, and obtaining a marked textile material. The marking point is that point of interest established according to a predetermined design pattern of the user.

Specifically, the dilution to be applied for obtaining a marked textile material comprises a concentration in the range of 2.5 -10 grams of over-pigmentation composition per kilogram of dilution. During this method, the initial fibre of the textile material is not affected or altered by laser radiation.

In a further embodiment, disclosed is a textile product comprising a textile material marked according to the method described above, i.e., over-pigmented. Thus, the textile product comprises a user-defined design pattern.

Therefore, the development of the present solution allows the laser marking of non-reactive textiles initially, having been dyed or not, by means of a laser radiation between 400 and 1,800 nm, including the radiation of a solid fiber optic laser - 1,070 nm -, alternatively to other current solutions where other reactive dyes or another laser marker are used, such as the $CO_2$ gaseous state laser.

**Brief description of the figures**

Figure 1 shows a diagram of the discolouration process where a laser radiation is applied on an area stained with the over-pigmentation composition, removing said composition and the base pigment from the textile material.

Figure 2 shows a photograph of the results obtained by laser marking a denim-type textile after the application of a laser marker and subsequent washing to the laser marking of an anionic over-pigmentation composition comprising an organic carbon black over-pigment.

Figure 3 shows a photograph of the results obtained by laser marking a denim-type textile after the application of a laser marker and subsequent washing to the laser marking of an anionic over-pigmentation composition comprising a mineral over-pigment.

Figure 4 shows a photograph of the results obtained by laser marking a black dyed non-denim textile after application of a laser marker and subsequent washing to laser marking of an anionic over-pigmentation composition.

Figure 5 shows a photograph of the results obtained by laser marking a green dyed non-denim textile after application of a laser marker and subsequent washing to laser marking of an anionic over-pigmentation composition.

Figure 6 shows a photograph of the results obtained by laser marking a blue-tinted non-denim textile after application of a laser marker and subsequent washing to laser marking of an anionic over-pigmentation composition.

Figure 7 shows a set of photographs (a, b, c and d) of the results obtained by laser marking a non-denim textile dyed navy blue after the application of a laser marker and subsequent washing to the laser marking of an anionic over-pigmentation composition.

Figure 8 shows a set of photographs of the results obtained by laser marking a tencel fabric: a) after washing a textile dyed with indigo pigment, b) fixing the colour after application of the laser marker.

## Detailed description

The present solution discloses an over-pigmentation composition. The over-pigmentation composition is an aqueous solution comprising an over-pigment, a dispersing agent, a glycol and a wetting agent.

In particular, to obtain a kilo of the over-pigmentation composition, the following is used:

- 300 - 550 grams of water,
- 100 - 200 grams of over-pigment,
- 250 - 350 grams of dispersing agent,
- 50 - 150 grams of glycol, and
- 5-15 grams of wetting agent.

The over-pigment is at least a pigment capable of absorbing radiation from a laser at a predetermined wavelength. Additionally, the over-pigment has a particle size of less than 10 micrometres. This particle size allows a correct arrangement during its application on the textile to be marked, achieving a good surface dispersion of the over-pigment on the textile.

The over-pigment is, particularly, a pigment capable of absorbing low wavelength radiation, in the visible or near infrared range, in a wavelength range of 400 nm to 1,800 nm. This absorbed radiation can be used for the partial or total removal of the pigments present in the textile material, both the over-pigment and the base pigment.

In a particular embodiment, the wavelength range is from 600 nm to 1,600 nm. In another more particular embodiment, the range is from 700 nm to 1,400 nm, and more particularly between 800 nm and 1,200 nm. In a preferred embodiment, the wavelength range is from 1,060 nm to 1,090 nm, and more specifically from 1,060 nm to 1,070 nm. This particular wavelength range allows a solid-state laser, preferably a fiber optic laser, to be employed instead of a $CO_2$ gaseous state laser as presently employed, as a laser marker. This type of laser marker enables reducing the cost of the textile marking operation, significantly increasing the quality (definition and repeatability) of the final finish in the textile, significantly increasing the durability of the textiles processed using this method, and therefore releasing a smaller amount of fibres in each wash of the garment during the finishing process of the garment, as well as throughout its useful life.

Additionally, the over-pigment of the composition is a dark-coloured pigment. More specifically, the over-pigment may be a black, grey, blue, green, red, orange pigment or variations thereof.

The use of a dark over-pigment allows for a better contrast in the final product obtained. That is, a textile that has as its base a white colour (original of cotton), or with an initial dyeing in light colours, when treated with a dark pigment and subsequently marked with laser, gives rise to a product with a greater contrast in the marked pattern. For a light over-pigment embodiment, laser marking can also be performed, but the contrast is much lower and, in some cases, practically negligible in case of employing a textile with a light base colour, e.g. white, as natural cotton is. This method would therefore be feasible in some embodiments, although it would be advisable to present a dark colour as a base colour to achieve an acceptable contrast with an over-pigment in a light shade.

In another particular embodiment, the over-pigment may be an organic pigment, for example, carbon black, or inorganic, for example, a mineral pigment. The choice of an over-pigment or another can have a direct impact on the sustainability of the textile dyeing process.

In a particular embodiment, the over-pigment is carbon black. This pigment has a strong colouring power. A small amount can produce an intense and deep black colour, which is very effective for achieving dark tones. In addition, it has a very small particle size and a large surface area, which contributes to its strong colour properties and its ability to cover surfaces evenly. It provides excellent opacity and coverage, which is useful in textile applications where full coverage and a deep and uniform colour are desired. Carbon black is chemically stable and resistant to environmental factors such as light, heat and chemicals, which ensures that dyed textiles retain their colour during the coverage time. On the other hand, it can impart electrical conductivity to textiles, which can be beneficial for producing antistatic or conductive fabrics. Carbon black is compatible with various types of textile fibres, including natural fibres (such as cotton and wool) and synthetic fibres (such as polyester and nylon). In this way, the use of this type of pigment in textile dyeing provides an intense dark colour, difficult to achieve with other pigments. Due to its strong dyeing power, the use of a small amount of pigment is required which translates into an economically competitive option. In addition, it has excellent durability and uniformity, giving rise to textiles resistant to washing, sun exposure and abrasion, with a consistent colour throughout the textile. Additionally, carbon black requires the use of dispersion and stabilizer processes due to its tendency to agglomerate.

On the other hand, a mineral pigment with a high concentration of calcium carbonate can also be used for dyeing textiles. This type of mineral material has a high surface area. This feature provides a high number of active points for the adherence of dye molecules. This results in a significant improvement in the absorption and fixation of the dye in the textile, which generates more vibrant and durable colours. The material exhibits strong interactions with various dye molecules, improving the affinity between the dye and textile fibres. This ensures better absorption and retention of the dye. Textiles dyed with mineral pigment show improved colour fastness properties. This means that the colours are less likely to fade over time or with washing, keeping the appearance of the fabric for longer. This material is compatible with a wide range of dyes, including natural and synthetic dyes. This versatility allows it to be used in various dyeing applications and for different types of fibres, which, together with its own environmentally friendly design, contributes to obtaining more sustainable textile products. In short, mineral pigment offers numerous advantages for textile dyeing, including improved dye affinity, enhanced colour fastness, environmental friendliness, and cost-effectiveness. Its characteristics make it a valuable material for achieving sustainable and high-quality dyeing results in the textile industry.

The choice of the size and shape of the over-pigments depends on several factors, such as the desired colour intensity, coverage, texture, and method of application. In general, different structures of these over-pigments can be listed:

- Nano-particles: extremely small particles with diameters typically from 10 to 100 nanometres as a single unit. Its density is between 1.8 to 2.1 $g/cm^3$. Nano-particles provide excellent colour intensity and dispersion properties.
- Micro-particles: these are slightly larger particles with diameters ranging from 100 nanometres to a few micrometres. They offer good coverage and colour opacity.

Regarding the shapes of these over-pigments, they can also be differentiated between:

- Spherical: spherical particles provide good colour intensity and coverage. They are often preferred to achieve an even distribution of colour.
- Aggregates: aggregate particles are formed by small groups of primary particles. They offer enhanced colour intensity and can provide unique textural effects on textiles.
- Nodular: nodular particles have irregular shapes that resemble small nodules. They can contribute to a matte finish and improve colour depth in textiles.

In a particular embodiment, the over-pigment of the composition comprises a particle size of less than 10 micrometres, preferably between 5 and 8 micrometres. In addition, the over-pigment has a nodular shape.

For its part, the dispersing agent is an element used to achieve a uniform distribution of the pigment particles in an aqueous medium. The dispersing agent prevents agglomeration by preventing the over-pigment particles from clumping together or forming agglomerates. By keeping the over-pigment particles apart, the dispersing agent helps stabilize the suspension. The dispersing agent improves the efficiency of the production process by reducing the viscosity of the mixture, facilitating handling. Therefore, production is faster and more efficient. Obtaining a good dispersion of the over-pigmentation composition ensures a much more uniform application on the textile to be marked.

Dispersing agents can be classified into different categories according to their chemical nature and their mechanism of action. Among the best-known dispersants, anionic, cationic (amines and quaternary ammonium salts, such as benzalkonium chloride), non-ionic (ethers, polyethers, alcohols), amphoteric (betaines and sulfobetaines) and polymeric (acrylic and polymethacrylic polymers, polyurethanes and peptide and protein polymers) dispersants can be highlighted. Additionally, new dispersants have been developed, such as nano-dispersants that use nano-particles to stabilize the dispersion, or reactive dispersants, which are covalently attached to the surface of the pigment, providing additional stability.

In a particular embodiment of the invention, anionic dispersants are employed that comprise negative charges that repel the particles of the over-pigment from each other, preventing agglomeration. This type of anionic dispersants includes carboxylic acid salts (fatty acid soaps), sulphates and sulphonates (alkyl sulphates and alkylbenzene sulphonates) and phosphates and phosphonates (phosphoric and phosphonic acid salts). In a particular embodiment, the dispersing agent is a sulphate. Specifically, in a particular embodiment is alkyl sulphate.

The wetting agent is an element participating in the improvement in the dispersion and adhesion of over-pigments, adjusting the viscosity and compatibility with other components. Additionally, they accelerate the drying of the composition once applied to the textile. These benefits result in high-quality textile products with vibrant and durable colours. In particular, the wetting agent reduces the surface tension between two phases, such as the solid (over-pigment) and the liquid (carrier), improving the dispersion and adhesion of the over-pigment. It participates in the improvement of the dispersion of the over-pigment in the mixture of the composition, ensuring an even distribution of said over-pigment. On the other hand, it succeeds in increasing the adhesion of the over-pigment to the surface of the textile where it is applied, which is essential to obtain a uniform and durable coverage. In addition, it prevents agglomeration of the over-pigment particles, which can improve the colour quality and consistency of the final product.

Among the wetting agents may be ethoxylated fatty alcohols (ethoxylated lauryl ether) or ethers, for example, of propylene and ethylene. These compounds are effective in reducing the surface tension of the solution, improving the wetting of the over-pigments. They are also known for their low foaming, which is beneficial in industrial processes. In addition, they can offer adjustable solubility and wetting properties, which makes them versatile for different pigment formulations. There are also derivatives of fatty acids and glycerine that offer good properties as a wetting agent and, additionally, are biodegradable, which makes them attractive from an environmental point of view. In contrast, there are compounds such as alkylphenol ethoxylates (nonylphenol ethoxylate) whose use may be restricted due to environmental concerns. On the other hand, there are silicones (modified siloxanes) that can be used as a wetting agent, providing excellent wetting properties and can improve the softness and finish of textiles, in addition to reducing the surface tension of the formulations. In a particular embodiment, the wetting agent employed is ethylene oxide.

On the other hand, the glycol comprised in the over-pigmentation composition plays a complementary role to the dispersing agent and the wetting agent. Glycol is a chemical compound belonging to the family of alcohols, examples being ethylene glycol and propylene glycol. Glycol is employed as a solvent to disperse and dissolve other components in the formulation of the over-pigmentation composition. In addition, it helps to adjust the viscosity of the mixture to make it easier to handle and apply and to improve the stability of the pigment, preventing sedimentation and increasing the uniformity of the dispersion of the particles in the resulting composition. In a particular embodiment, the glycol employed is ethylene glycol.

Thus, the glycol of the over-pigmentation composition acts primarily as a solvent and viscosity modifier, while the wetting agent focuses on improving the interaction between the over-pigment and the medium, facilitating more effective dispersion and adhesion. That is, while the glycol is designed to affect the physical properties of the mixture (such as viscosity and stability), the wetting and dispersing agent affect the chemical-physical properties of the interaction between the components, such as surface tension and dispersion. The presence of the glycol provides an adequate and stable environment for the over-pigment, in addition to the performance of the wetting and dispersing agent, which ensure that the over-pigment is evenly dispersed in the mixture and subsequently adheres adequately to the surface of the textile. In summary, the combined use of these compounds is essential to obtain a high-quality final product with desirable application, stability and performance properties.

Therefore, thanks to the presence of these elements, the over-pigmentation composition can be applied on a textile formed from cotton, raw cotton, polyester, spandex, bamboo fabric, tencel fabric or a combination of these, so that the resulting textile is reactive to radiation irradiated by a laser marker in the wavelength range between 400 - 1,800 nm and can be marked by a laser marker.

However, regardless of the over-pigment used, the characteristics that initially generated advantages in the dye can be translated into disadvantages in the case of requiring the removal of this compound when it acts as an over-pigment.

In a particular embodiment of dyeing, the over-pigmentation composition further comprises a fixing agent. The fixing agent is in a formulation of 5 - 25 grams per kilogram of composition. The fixing agent is used to fix the dye and ensure that the colour remains vibrant and resistant to multiple washes. Among the fixing agents that may be employed in the composition are mordants and binders.

Mordants are chemicals that help to fix pigments to textile fibres. In a particular embodiment, the mordant employed is a metal salt. In a more particular embodiment, the mordant is selected from the group consisting of aluminium sulphate, aluminium acetate and iron sulphate - these mordants form bonds with the fibres and pigments of the textile, improving the adhesion and colour fastness. On the other hand, binders are substances that are mixed with the pigments to create an adherent layer on the textile fibres. These products can be incorporated for those compositions that do not chemically react with fibres. Among the fixing agents of the binder type, acrylic resins may be employed. These resins are used in pigment dyes and help form a film on the fibre that traps the over-pigment. On the other hand, polymers, such as polyvinyl alcohol, could also be used to create a network on the fibre, which increases the resistance to washing.

Additionally, fibre conditioners may be employed. Fibre conditioners are applied before or after the dyeing process to prepare the fibre or improve colour fixation: There are cationic conditioners, such as quaternary ammonium chlorides, which increase the positive charge in the fibre, facilitating the adhesion of anionic dyes. On the other hand, silicones and softeners can improve colour absorption and fabric softness, reducing friction during washing and prolonging colour life. There are also colour fixing agents that can be applied after dyeing to increase the colour fastness: examples of this type are formaldehyde and its derivatives: Although less and less used for environmental and health reasons, these compounds can significantly improve wash resistance. Acetic acid and vinegar are also used in natural tinctures as they help to close the cuticles of the fibre, trapping the colour inside. Finally, reactive fixing agents that form covalent bonds between the pigment and the fibre can be used, improving the resistance to washing and light.

In contrast, the over-pigmentation composition may also comprise 10 -50 grams of an anionic active tensor per kilogram of composition. The presence of an anionic active tensor generates a modification in the characteristics of the composition. Specifically, it interacts with the over-pigment of the composition, giving rise to an anionic over-pigment. In this way, the embodiment of the over-pigmentation composition comprising an anionic active tensor has no or very low chemical affinity with the textile on which it is applied. The chemical affinity can be measured by the number of chemical bridges that are generated between the composition and the textile.

In this sense, in a preferred embodiment, the rest of the elements of the over-pigmentation composition (dispersing agent, wetting agent) are selected to favour the negative charge of the over-pigmentation composition. In this sense, as indicated above, the use of an anionic dispersing agent is preferred when obtaining an anionic composition since it collaborates in the formation of the negative charge of the composition.

The over-pigmentation composition according to this particular embodiment, comprising an anionic active tensor, has a negative charge. The negative charge of this composition allows it to interact specifically with other positively charged compounds and surfaces. Being negatively charged generates an opposite effect by not being compatible with textile fibres that have negatively charged functional groups, avoiding an ionic bond with the pigment. Anionic pigments are water-soluble or dispersible, which facilitates their uniform application in aqueous solutions during the dyeing and printing processes. The water solubility obtained in the over-pigmentation composition also facilitates the cleaning and handling of the pigments during the production process.

Well-fixed anionic pigments also have good wash resistance, which ensures that the colour remains vibrant and does not fade easily. In this particular embodiment, by having a low affinity, we are able to reverse said wash resistance and this allows us to easily remove excess pigment remaining in the garment.

Thus, the over-pigmentation composition according to this embodiment can be used in printing and dyeing processes due to its ability to provide bright and long-lasting colours. The combined use with other agents such as wetting agents, dispersants and fixatives improves its performance. Additionally, anionic pigments are available in a wide range of colours, allowing great versatility in textile design, providing vivid and saturated colours, which is highly desired in textile applications. Another important factor is environmental improvement. The anionic composition according to the present embodiment may be designed to be more environmentally friendly, being biodegradable or less toxic elements compared to other types of pigments.

Thanks to the presence of this anionic active tensor, the over-pigmentation composition is able to interact with a base pigment previously present in a textile, activating said pigment in the presence of laser radiation, and to be easily removed once the laser marking has been carried out on an initially non-reactive textile, for example on a denim fabric dyed in pure indigo. In this sense, it is understood to be an easy separation, for example, to washing after laser marking.

That is, the over-pigment can generate a temporary interaction with the initially non-reactive textile to laser radiation, and be easily removed or separated from the textile on which it is applied once the laser marking is finished.

In other words, thanks to this chemical affinity contributed by the anionic composition, the application of an anionic over-pigmentation composition as described above on a textile, initially non-reactive, enables performing a laser marking of the textile, and once the marking is finished, to easily remove or eliminate the over-pigmentation composition by washing the textile.

In a particular embodiment, the anionic active tensile is an alkylbenzene sulphonate, for example, sodium dodecylbenzene sulphonate.

In a further embodiment, a method of obtaining the over-pigmentation composition is disclosed. This method comprises the following steps:

-    Mixing 100 - 200 grams of over-pigment, 250 - 350 grams of dispersing agent, 50 - 150 grams of glycol and 5-15 grams of a wetting agent in 300 - 550 grams of water, until a uniform viscous mixture is obtained,
-    Milling the uniform viscous mixture resulting in a composition comprising a particle size of less than 10 micrometres.

The result of this milling is an over-pigmentation composition capable of activating a textile that is non-reactive to laser radiation in the wavelength range between 400 -1,800 nm, with a good surface dispersibility on the textile. The resulting over-pigmentation composition is a composition useful for the pigmentation and subsequent marking of a textile material by the application of laser radiation.

According to the present disclosure, the uniform viscous mixture is the result of the mixture between the over-pigment and the rest of the components. In a particular embodiment, the uniform mixing of the elements can be carried out by introducing the elements into a mixer for at least two hours. For its part, the milling can be carried out in a mill for at least 5 hours. In a particular embodiment, the milling is carried out so that the particle size is reduced to a size between 5 and 8 micrometres. The milling of the particles present in the over-pigmentation composition gives a good surface deposit on the textile material.

Additionally, in a particular embodiment, the method of obtaining the over-pigmentation composition may have the step of incorporating an anionic active tensor into the composition. In a particular embodiment, the incorporation is carried out once the milling of the viscous solution has been carried out. The incorporation of the anionic active tensor is carried out as a last step, with a duration of 15 minutes. In this way, it is possible to vary the electrical charge of the composition and pass the mixture from an ionic state (positive charge) to an anionic state (negative charge). The result of this incorporation is the functionalization or modification of the over-pigment molecule, resulting in an anionic over-pigmentation composition. Obtaining an anionic over-pigmentation composition as disclosed enables the composition to have a low affinity with the textile, so that, once the laser marking has been carried out, the composition is easily removable.

In the same way, the method of obtaining over-pigmentation may have a step of incorporating a fixing agent. Specifically, the method may further comprise incorporating, per kilogram of composition, 5 - 25 grams of a colour fixing agent into the over-pigmentation composition, such that the colour may be fixed to the fabric.

In yet another embodiment, a method of making a laser-marked textile is disclosed. The method comprises the following steps:

- Applying a dilution of the over-pigmentation composition on a region of a textile, either in a localized area or in the entire piece to be treated, defining a stained area and
- Applying laser radiation on the stained area where the over-pigmentation composition has been applied.

The laser beam, by impinging on at least one marking point of the stained area of the dyed textile material, partially or totally removes both the over-pigmentation component and the base pigment by decolourising the dyed textile material, providing different discolouration shades of the base dyeing. The discolouration process does not affect the fibre of the textile material.

The concentration of the dilution employed for obtaining a textile material with laser marking is in the range 2.5 - 10 grams of over-pigmentation composition according to the present invention per kilogram of dilution used in the method. That is, the composition comprises a dilution factor in the range between 400 and 100, this factor being measured as the mass of diluted composition divided by mass of concentrated composition.

$$\text{Dilution factor} = \frac{\text{Mass of the diluted composition}}{\text{Mass of the concentrated composition}}$$

Additionally, the method of obtaining the textile material may further comprise the step of removing the over-pigmentation composition remaining in the stained area of the textile by obtaining a textile marked according to the initial colour of the textile material. In a particular embodiment, the removal of the over-pigmentation composition is carried out by means of a wash. Washing is a simple separation process, which can be carried out through a multitude of processes. These processes include:

- Traditional washing: washing that includes the use of water together with a chemical agent. This type of washing is usually carried out in a washing machine, preferably industrial.
- Ozone: Through ozone generators, the textiles are deposited in a special drum where ozone is injected at different concentrations, to achieve a general discolouration of the fabric or simply a removal of excess dye. In addition, the ozone process can be wet as it accelerates the discolouration process.
- Nano-bubbles: in this process a system of spraying or spraying a water/chemical agent mixture in a washing machine is required. It is a system where nozzles are mounted in the washing drum and instead of filling the washing machine with water and adding the chemical agent, it is sprayed directly. This system manages to save on water, chemical agent and not have any type of liquid discard since the ratio is very low and everything is absorbed by the garments.
- Foam: in more current solutions, a system can be used to further reduce the consumption of chemical agent and water, through the use of foam. To do this, the textiles are introduced into a drum and with a specific system the water is mixed with a chemical agent that typically carries a very concentrated foamer and the drum is filled through a hose.

The result of this process may be a textile product comprising a textile material with a design pattern obtained by the method described previously.

Example 1 - Organic over-pigmentation composition

This test was performed with an over-pigmentation composition that includes a black organic pigment, subsequently made anionic with the addition of an anionic active tensile, specifically 20 grams of sodium dodecylbenzene sulphonate.

In particular, the remainder of the base over-pigmentation composition was as follows:

- 460 grams of water,
- 140 grams of organic over-pigment carbon black,
- 95 grams of ethylene glycol
- 275 grams of tridecyl sodium sulphate (TDS) as a dispersing agent, and
- 10 grams of ethylene oxide as a wetting agent.

The result of the mixing and subsequent milling of this composition is an over-pigmentation composition capable of activating a textile material to be reactive to a radiation of a laser marker.

Depending on the purpose of the laser marking used, the composition may comprise an anionic active tensioner, enabling separation by washing, or a fixing agent, achieving a good result in the colour of the textile material.

The concentrated composition of the above-described over-pigmentation composition should not be applied directly onto the fabric. That is, dilution of the composition is necessary. To do this, 5 grams of the concentrated composition were taken and diluted with distilled water to obtain a kilogram of composition, equivalent to a dilution factor of 200, of diluted over-pigmentation suitable, now, for application on a textile material.

The textile material on which the over-pigmentation composition was applied has the following properties

- Textile to be marked: 100 % cotton denim fabric

- Original dye: indigo

In this way, the diluted over-pigmentation composition was applied to the fabric by immersing the fabric in the composition described above, either with water at room temperature, or preheated, without significantly varying the final result. Similar results can also be obtained by spraying the over-pigmentation composition on at least one region, the stained area, of the textile material to be marked.

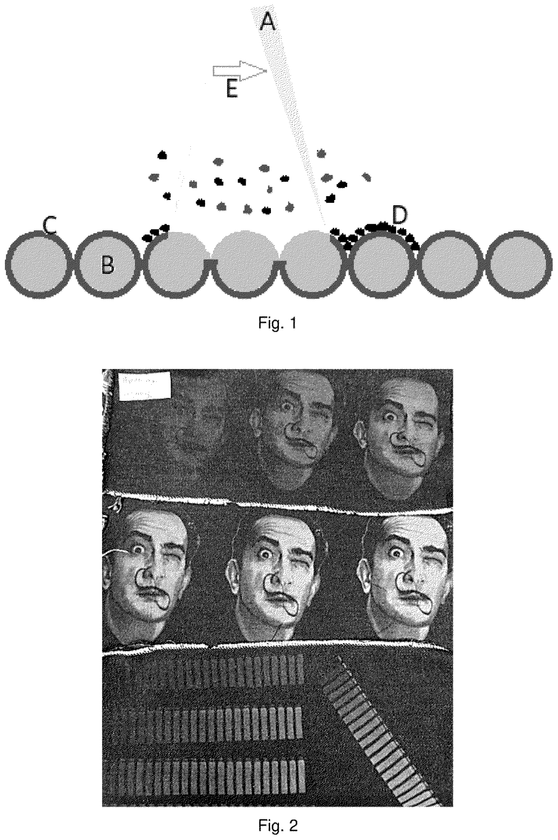

For laser marking, a fiber laser was used emitting at a wavelength of 1,070 nm, with a laser energy between 10 and 80 millijoules (mJ), achieved by means of an exposure time between 2 and 60 $\mu$s with a laser generator with a power between 0.5 kW and 2 kW of optical power. Specifically, a laser at different energy levels (10, 20, 30, 40, 50, 60, 70 and 80 mJ) was used to mark the textile with laser, resulting in a variety of contrasts that can be achieved by this solution. Figure 1 shows the discolouration process. Specifically, it is shown how a laser radiation (A), with a displacement (E), is directed on an area stained with the over-pigmentation composition (D). The result of this irradiation is the removal of said composition (D) and the base pigment (C) from the textile material, so that the textile fibre (B) is not affected or damaged, as can occur when using a $CO_2$ laser.

Having employed 20 grams of sodium dodecylbenzene sulphonate as the anionic active tensor, the excess over-pigmentation composition could be removed by carrying out a standard household wash, i.e. a wash in a conventional washing machine with tap water + detergent, removing the remaining over-pigmentation composition from the textile after marking.

As shown in figure 2, the result is fully satisfactory. The over-pigmentation composition used helps to remove the original dye (indigo) with the laser energy applied to it, obtaining a good contrast in the final result.

Example 2 - Mineral over-pigmentation composition

In a second example, similar to the first example disclosed previously, 140 grams of an inorganic mineral over-pigment was employed in place of the carbon black pigment. This composition was applied again on a denim textile dyed in pure indigo using an anionic over-pigmentation composition.

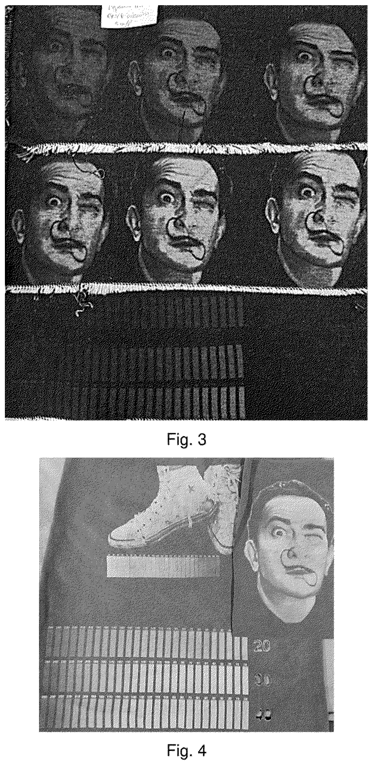

As shown in figure 3, the result after washing is totally satisfactory. Again, the over-pigmentation composition helps to remove the original dye (indigo) with the laser energy applied on it, obtaining a good contrast in the final result.

Example 3 - Application of over-pigmentation composition on a non-denim textile

In addition, additional tests were carried out on non-denim textiles. The over-pigmentation composition comprised 5 grams of the previously disclosed concentrated pigmentation composition, per 1 kilogram of composition diluted in distilled water.

In this case, the fabric was dyed by dipping it with an over-pigment and marking it with a laser marker at different energy levels achieved with exposure times and optical power similar to that disclosed in the previous example, to see the variety of contrasts that can be achieved.

Specifically, figure 4 shows the results obtained by laser marking a non-denim fabric dyed in indigo with the following properties:

- Textile to be marked: 100 % cotton fabric
- Original dye: raw
- Base pigment: black organic pigment.
- Power applied by the laser: 20, 30, 40 mJ.

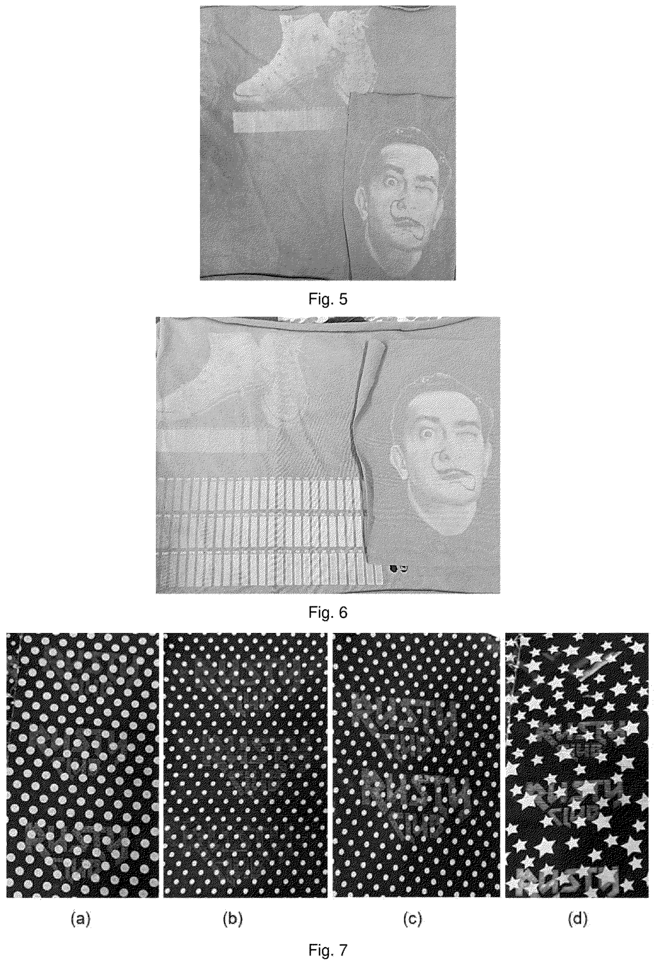

Figure 5 shows the results obtained by laser marking a dyed non-denim fabric with the following properties:

- Textile to be marked: 100 % cotton fabric
- Original dye: raw
- Base pigment: green organic pigment.
- Laser power: 20 (Dali), 30 (degraded), 40 mJ (trainers).

Figure 6 shows the results obtained by laser marking a dyed non-denim fabric with the following properties:

- Textile to be marked: 100 % cotton fabric
- Original dye: raw
- Base pigment: blue organic pigment.
- Energy applied by the laser: 20, 30, 40 mJ.

Figure 7 shows a set of photographs of the results obtained by laser marking a dyed non-denim fabric with the following properties:

- Textile to be marked: 100 % cotton fabric
- Original dye: raw
- Base pigment: dark blue organic pigment
- Laser repetition rate: 80 kHz

As shown in these Figures 4 - 7, the results are totally satisfactory. The composition helps to remove the original dye with the laser energy applied on it and obtain a good contrast in the textile material.

Example 4 - Comparison of fixation and washing of an over-pigmentation composition

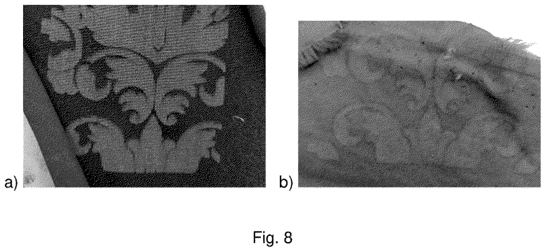

Finally, Figure 8 shows a set of photographs of the results obtained by laser marking a tencel textile material.
Figure 8a shows the result of using an anionic over-pigmentation composition applied on a textile dyed with indigo pigment. When an anionic over-pigmentation composition is applied, it is possible to remove the excess composition used, achieving a good contrast in the pattern drawn on the textile material. For its part, Figure 8b shows the result of using an over-pigmentation composition. On this occasion, the purpose of over-pigmentation is the colouration of a designed pattern. To achieve an improvement in the colouration performed, a fixing agent was applied subsequently to the laser marking so that a good fixation of the colour obtained is obtained.

**Claims**

1.  - An over-pigmentation composition of a textile material **characterised in that** the composition is a solution comprising, per kilogram of composition:

    - 300 - 550 grams of water,
    - 100 - 200 grams of over-pigment,
    - 250 - 350 grams of dispersing agent,
    - 50 - 150 grams of glycol, and
    - 5-15 grams of wetting agent;

    wherein the over-pigment is a pigment configured to absorb laser radiation in the range of 400 to 1,800 nm and has a particle size of less than 10 micrometres.

2.  - The over-pigmentation composition according to claim 1, wherein the composition further comprises 10 - 50 grams of anionic active tensor.

3. The over-pigmentation composition according to claim 1, wherein the composition further comprises 5-25 grams of a colour-fixing agent.

4. - The over-pigmentation composition according to any one of claims 1 to 3, wherein the over-pigment is configured to absorb radiation of wavelength in the range from 600 nm to 1,600 nm, preferably from 700 nm to 1,400 nm, more preferably from 800 nm to 1,200 nm, more preferably from 1,060 nm to 1,090 nm, and more preferably still from 1,060 nm to 1,070 nm.

5. - The over-pigmentation composition according to any one of claims 1 to 4, wherein the over-pigment is a dark colour pigment.

6. - The over-pigmentation composition according to any one of claims 1 to 5, wherein the over-pigment is an organic pigment, preferably carbon black.

7. - The over-pigmentation composition according to any one of claims 1 to 5, wherein the over-pigment is an inorganic pigment, preferably a mineral pigment.

8. - The over-pigmentation composition according to any one of claims 1 to 7, wherein the composition comprises a dilution factor between 400-100.

9. - Method of obtaining an over-pigmentation composition according to any one of claims 1 to 8, **characterized in that** it comprises the following steps:

   - Mixing, per kilogram of composition, 100 - 200 grams of over-pigment, 250 - 350 grams of dispersing agent, 50 - 150 grams of glycol and 5-15 grams of a wetting agent in 300 - 550 grams of water, until a uniform viscous mixture is obtained; and
   - Milling the uniform viscous mixture giving rise to a composition comprising a particle size of less than 10 micrometres, obtaining an over-pigmentation composition.

10. - The method of obtaining according to claim 9, wherein the method further comprises incorporating, per kilogram of composition, 10 - 50 grams of an anionic active tensor to the over-pigmentation composition.

11. - The method of obtaining according to claim 9, wherein the method further comprises incorporating, per kilogram of composition, 5 - 25 grams of a colour fixing agent to the over-pigmentation composition.

12. - A method of obtaining a textile material with laser marking **characterized in that** it comprises the following steps.

   - applying a dilution of the over-pigmentation composition according to any one of claims 1 to 8, onto an area of a textile material, wherein the concentration of the dilution is 2.5 - 10 grams of over-pigmentation composition per kilogram of dilution, and
   - applying laser radiation on the region where the dilution has been applied, partially or totally removing both the over-pigmentation component and the base pigment, and obtaining a marked textile material.

13. - The method of obtaining a textile material with laser marking according to claim 12, wherein the method further comprises: removing excess over-pigment present in the textile material by washing.

14. A textile product **characterized in that** it comprises textile material comprising a design pattern obtained by the method according to any one of claims 12 to 13.

Fig. 1

Fig. 2

Fig. 3

Fig. 4

Fig. 5

Fig. 6

(a)         (b)         (c)         (d)

Fig. 7

a)

b)

Fig. 8

Europäisches
Patentamt

European
Patent Office

Office européen
des brevets

# EUROPEAN SEARCH REPORT

**Application Number**

EP 24 38 2882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 548665 A (INTERNATIONAL IMAGING MAT INC [US]) 20 November 2023 (2023-11-20) | 1-11 | INV. D06P1/00 B23K26/06 |
| Y | * example 1; table 5 * ----- | 12-14 | B23K26/36 B23K26/082 |
| Y | TSE SHUN-TING ET AL: "Effect of Laser Treatment on Pigment Printing on Denim Fabric - A Study of Colour Properties", FIBERS AND POLYMERS, THE KOREAN FIBER SOCIETY, SEOUL, vol. 23, no. 3, 1 April 2022 (2022-04-01), pages 728-735, XP037788650, ISSN: 1229-9197, DOI: 10.1007/S12221-022-3096-5 [retrieved on 2022-04-01] * EXPERIMENTAL SECTION * ----- | 12-14 | D06B11/00 D06P1/44 D06P1/62 D06P1/651 D06P5/13 D06P5/15 D06P5/20 |

TECHNICAL FIELDS
SEARCHED (IPC)

D06P
D06B

The present search report has been drawn up for all claims

| Place of search | Date of completion of the search | Examiner |
|---|---|---|
| The Hague | 12 February 2025 | Massella, Daniele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2882

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | Publication date |
|---|---|---|---|
| JP 2023548665 A | 20-11-2023 | EP 4248010 A1<br>JP 2023548665 A<br>WO 2022108648 A1 | 27-09-2023<br>20-11-2023<br>27-05-2022 |

EPO FORM P0459

For more details about this annex : see Official Journal of the European Patent Office, No. 12/82